# FASCICULE DE BREVET EUROPEEN

(11) **EP 4 165 391 B1**
(45) Date de publication et mention de la délivrance du brevet: **12.02.2025**
(21) Numéro de dépôt: 21733781.5
(22) Date de dépôt: 16.06.2021
(51) Int. Cl.: G01N 17/04

(54) **TEMOIN DE CORROSION MAGNETIQUE**
MAGNETISCHER KORROSIONSINDIKATOR
MAGNETIC CORROSION INDICATOR

(30) Priorité: 16.06.2020 FR 2006232
(43) Date de publication de la demande: 19.04.2023
(73) Titulaire: Cerema, 69500 Bron (FR)
(72) Inventeur: IHAMOUTEN, Amine, 49460 Montreuil-Juigné (FR)
(74) Mandataire: Cabinet Camus Lebkiri
(86) Numéro de dépôt international: PCT/EP2021/066214
(87) Numéro de publication internationale: WO 2021/255082

(56) Documents cités:
- EP-A2- 2 214 290
- WO-A2-2004/003255
- CN-A- 109 994 980
- CN-U- 202 037 292
- DE-A1- 102017 129 573
- FR-A1- 2 955 178
- US-A1- 2018 187 836
- ANONYMOUS: "Channel / Sandwich Magnet Assemblies - Flange Magnets | Dura Magnetics", 1 August 2016 (2016-08-01), XP093126786, Retrieved from the Internet <URL:https://web.archive.org/web/20160801181733/https://www.duramag.com/magnetic-assemblies/channel-sandwich-magnet-assemblies/> [retrieved on 20240202]

## Description

### DOMAINE TECHNIQUE DE L'INVENTION

Le domaine technique de l'invention est celui de la détection et du suivi de la corrosion des composants métalliques présents dans un milieu poreux, notamment dans les structures du génie civil, comprenant au moins une armature métallique et un enrobage en béton par exemple. Par « un enrobage » on entend une couche poreuse à l'état solide enrobant l'armature métallique. Par exemple, dans le cas d'une structure du génie civil en béton armé, le béton est considéré comme l'enrobage.

Elle se rapporte plus particulièrement à un témoin permettant la mesure de caractéristiques magnétiques sensibles à la corrosion d'une armature métallique d'une paroi d'une structure du génie civil comprenant un enrobage poreux tel que du béton, aux structures du génie civil, et liants comprenant un tel témoin, au procédé de détection et de suivi du front de corrosion dans un enrobage poreux comprenant un tel témoin, et à un procédé de fabrication de paroi en béton armé comprenant un tel témoin.

De manière générale, la présente invention peut être utilisée pour détecter et suivre la corrosion dans tous types de structures du génie civil comprenant un enrobage poreux et une armature métallique enrobée dans l'enrobage susceptibles de subir de la corrosion, (en particulier les structures ayant des parois en béton armé).

L'invention est donc susceptible d'être utilisée plus particulièrement pour la détection de la corrosion dans les structures du génie civil (bâtiments, barrages, ponts, tunnels, piscine etc.), notamment les structures maritimes et les fondations d'ouvrages côtiers ou en mer (digues, jetées, éoliennes, plates-formes offshores, barrage marémotrices, hydroliennes, etc.).

### ARRIERE-PLAN TECHNOLOGIQUE DE L'INVENTION

Si l'on exclut son vieillissement naturel, la durée de vie d'une structure du génie civil par exemple en béton armé, peut être limitée par la pénétration d'agents agressifs tels que les ions chlorures ou par les cycles de gel-dégel qui entraînent un gonflement et des fissurations ainsi qu'un écaillage des surfaces exposées aux sels de déverglaçage.

Un facteur commun à ces pathologies est la corrosion. La quantification de cette corrosion en moyenne ou en gradients surfaciques est subséquemment une phase primordiale dans le diagnostic des structures maritimes.

Des contrôles par carottage sur le béton armé sont régulièrement effectués par les maîtres d'ouvrages pour connaître la concentration en ions chlorures et ainsi estimer l'état d'avancement d'une éventuelle dégradation en utilisant des modèles prédictifs permettant d'optimiser les réparations des enrobages. Malheureusement, ces contrôles par carottage sont destructifs, ce qui minimise l'échantillonnage via le carottage, et donc limitent l'estimation de l'état d'avancement de la dégradation au niveau de l'ensemble de la structure.

Aussi, en terme opérationnel, la méthode communément utilisée pour la surveillance et la prévention face à de telles pathologies implique des inspections visuelles régulières pour le relevé des fissurations débouchant à la surface des parois de la structure, suivies de réparations sous forme d'enrobage pour empêcher l'eau chlorée d'atteindre les aciers.

Par ailleurs, différentes techniques de contrôle non destructif (CND) existent et permettent d'estimer des paramètres significatifs (indicateurs performanciels) de la durée de vie d'une structure, telle que le taux de saturation des bétons et la porosité.

Néanmoins, des difficultés surviennent dans l'identification des méthodes rentables et reproductibles fournissant des données utiles sur de longues périodes de temps, puisque le phénomène de corrosion des armatures des structures tend à se produire lentement.

Dans certaines applications, des techniques de surveillance intégrées sont mise en oeuvre utilisant des capteurs de différentes technologies placés dans le béton d'enrobage dans le but de mesurer la concentration des chlorures.

Par exemple il est connu un système de détection de corrosion comportant un témoin comprenant une résistance électrique qui augmente quand le témoin est corrodé, un moyen de mesure de la résistance et une puce RFID permettant lors d'un contrôle d'alimenter le moyen de mesure de la résistance et transmettre l'information à un lecteur extérieur.

Cependant un tel témoin a un coût élevé et en cas de détérioration de la puce RFID ou du moyen de mesure, ou encore d'une connexion entre les différents éléments du témoin, le lecteur extérieur recevra une information erronée.

En outre, le système peut en outre comprendre un interrogateur en dehors de la paroi de la structure et un témoin dans la paroi, l'interrogateur comprend un générateur de champ magnétique comprenant un radar à induction ou à onde électromagnétique et un lecteur de champ magnétique et le témoin peut comprendre un organe de maintien non magnétique et non métallique tel qu'un polymère ou en résine ABS et un conducteur corrodable. La corrosion peut être mesurée en fournissant par le générateur un champ magnétique primaire vers le béton, le conducteur corrodable génère un courant induit formant un second champ magnétique et l'interrogateur lit le second champ magnétique généré par le conducteur corrodable.

Cependant un tel témoin ne permet pas de fournir une information lorsque le conducteur corrodable a subi une corrosion suffisamment élevée pour ne plus avoir de conductivité entre ces extrémités. En outre le radar électromagnétique est un outil actif qui propage une onde jusqu'au témoin qui dépend de plusieurs facteurs dont des facteurs d'environnement tel que le taux d'humidité et du taux de chlorure entre le radar et le témoin c'est-à-dire dans la structure et en dehors. Ainsi le résultat de lecture ne sera pas identique en fonction de la météo et ne sont pas précis puisqu'ils sont sensibles aux différents facteurs de l'environnement. Enfin, un tel témoin doit être cartographié pendant la construction de la structure au risque sinon que le radar transmette et que le lecteur lise des ondes provenant de d'autres éléments de la structure pouvant renvoyer les ondes tel que l'armement de la structure ou des débris métalliques dans le béton. Enfin de tels témoins doivent être suffisamment volumineux pour permettre de refléter l'onde provenant de l'appareil actif par exemple le radar électromagnétique, ce volume peut entrainer des détériorations de la structure.

Ces différents témoins et systèmes ont donc des coûts extrêmement élevés en termes de déploiement à l'échelle d'une structure volumineuse, et présentent encore des contraintes techniques majeures (robustesse, fiabilité, autonomie.)

Il est connu aussi du document DE102017129573 un capteur de corrosion et un procédé de surveillance de la corrosion utilisée, par exemple, pour déterminer et surveiller la progression de la corrosion des armatures sur des éléments en béton armé. Le capteur magnétique de corrosion est constitué d'une tige de corrosion et d'une tige de référence en acier d'armature, les tiges comportant des aimants permanents à leurs extrémités. Le capteur de corrosion est installé dans l'enrobage en béton. Le champ magnétique est détecté à l'aide d'un scanner de champ magnétique et le résultat de la mesure est envoyé au dispositif d'affichage.

Le document US2004100278 décrit en outre un dispositif et son procédé, mesurant des propriétés de résonance ferromagnétique en appliquant un champ magnétique à la structure par agencement d'un aimant près de la structure. La résonnance ferromagnétique sera différente en fonction de l'état de corrosion de l'armature corrodé.

Ce dispositif ne permet pas de prévenir la corrosion mais de mesurer l'état de corrosion de l'armature. Il n'est donc pas possible de réaliser de la maintenance préventive pour empêcher la corrosion de l'armature puisque la corrosion de l'armature a déjà commencé lorsque l'on détecte un état de corrosion.

### RESUME DE L'INVENTION

Pour de nombreux ouvrages, en milieu maritime particulièrement, la prévention de la corrosion pour les structures en béton armé de l'ouvrage est indispensable pour améliorer leur durée de vie. De nombreuses techniques, donnant une information sur la présence d'ions chlorures dans l'enrobage à un endroit ponctuel de la structure, existent mais aucune ne donne d'information précise sur son front de pénétration et encore moins de manière non coûteuse et fiable.

L'invention offre une solution aux problèmes évoqués précédemment, en permettant une technique innovante pour l'évaluation non destructive, fiable, autonome, à distance et à bas coût du béton d'enrobage subissant une dégradation par la pénétration d'ions chlorures

Cette technique répond à un besoin de prévoir un moyen de détection de corrosion simple, peu coûteux pour les structures en béton armé.

Selon un premier aspect de l'invention, on tend à satisfaire ce besoin en prévoyant un liant liquide selon la revendication 1, comprennant un témoin de corrosion pour insertion dans un enrobage poreux d'une structure en béton armé, comprenant au moins un aimant permanent générant un champ magnétique induit, et une couche corrodable par des agents pathogènes notamment les ions chlorures, la couche corrodable étant solidaire de l'aimant, la couche corrodable comprenant un matériau ferromagnétique permettant de modifier le champ magnétique généré par l'aimant en fonction de l'état de corrosion du matériau ferromagnétique de la couche corrodable .

Grâce à l'invention, un tel témoin de corrosion est peu coûteux et permet simplement à l'aide d'un lecteur passif externe à la structure (boucle d'induction magnétique, magnétomètre, teslamètre) de connaître l'état de corrosion de la couche de corrosion située à une certaine profondeur et donc le front de pénétration d'agent pathogène dans la structure en béton armé.

En effet, l'introduction d'un élément ferromagnétique dans un champ magnétique accroit la déformation des lignes de champs du champ magnétique, ce qui se traduit, en terme de résultat, par la sommation du champ magnétique généré par l'aimant et du champ magnétique généré par l'aimantation de l'élément ferromagnétique. L'enrobage a une perméabilité relative proche de 1 alors que celle de la couche corrodable entre 200 et 10000. Ainsi lorsque la couche corrodable est corrodée, la masse ferromagnétique non corrodée diminue et modifie l'amplitude des lignes de champs magnétique et donc l'intensité du champ magnétique mesuré au niveau d'une surface d'auscultation de la structure.

Ainsi, le degré de corrosion du matériau ferromagnétique entraîne une variation de la masse ferromagnétique de la couche corrodable au contact de l'aimant, ce qui conduit à une variation de l'intensité du champ magnétique induit par l'ensemble.

Le témoin de corrosion de l'invention présente de nombreux avantages : au-delà d'être non destructif, il ne nécessite aucune source d'alimentation propre, il permet de faire de l'acquisition de données à distance, sans fil, avec une grande fiabilité et à faible coût. En outre en cas de corrosion intense de la couche corrodable, le témoin reste fiable du fait que l'aimant du témoin continu à générer un champ magnétique informant ainsi un état de corrosion intense de la couche corrodable du témoin.

En outre le lecteur est un outil uniquement passif permettant la lecture de l'onde du champ magnétique provenant du témoin, cette onde est beaucoup plus stable par rapport à la lecture d'une onde d'un outil actif selon les différentes conditions météorologiques, c'est-à-dire un taux d'humidité ou le taux de chlorure. Ainsi la lecture est beaucoup plus fiable qu'un outil actif tel que dans l'art antérieur.

Sur le plan opérationnel, après positionnement en amont de témoins de corrosion dans l'enrobage poreux d'une structure en béton armé lors de sa réalisation, le gestionnaire peut réaliser une cartographie initiale de référence de son ouvrage en mesurant l'intensité magnétique en chaque point relatif à un positionnement de témoin de corrosion. L'opération de diagnostic consistera ensuite à procéder régulièrement à de nouvelles campagnes de mesures de l'intensité magnétique sur ces points de référence et à évaluer le différentiel vis à vis de la mesure de référence de manière à conclure sur un état de corrosion de l'enrobage.

Ainsi pour une stratégie de gestion durable des structures, notamment des structures maritimes, il est possible de réaliser une méthode de suivi et de mesure non destructives électromagnétiques de manière performante et ainsi de diagnostic de l'état de la structure à un instant donné, de surveillance de l'évolution du vieillissement, donc de maintenance préventive de l'ouvrage.

L'invention vise également un liant dans un état liquide, notamment le béton hydraulique, comprenant un mortier et des témoins de corrosion selon le premier aspect de l'invention, le liant à l'état liquide devenant un enrobage poreux à l'état solide et étant destiné à devenir un enrobage d'une structure en béton armé.

Ainsi ce liant présente l'avantage de ne pas complexifier les étapes de fabrication de la structure en béton armé. En effet un tel liant comportant les témoins de corrosion, favorise l'opération de coulage du béton dans un coffrage contenant l'armature métallique de la structure sans ajouter d'étape de manipulation des témoins de corrosion. Une fois l'enrobage à l'état solide, la structure en béton armé comprend des témoins à différentes positions et profondeurs par rapport à la surface d'auscultation. Ainsi, il est possible de réaliser des mesures à différentes profondeurs et différentes positions de la structure pour évaluer l'état de corrosion de l'enrobage. Bien entendu, un tel liant demande d'avoir un nombre de témoins de corrosion suffisant pour garantir statistiquement une bonne répartition et un bon positionnement de ces témoins de corrosion permettant de réaliser un diagnostic performant de l'état de corrosion de l'ensemble de la structure. Par liant dans un état liquide on entend qu'il peut couler par exemple entre deux supports, même s'il comprend des particules solides notamment les témoins de corrosion, mais aussi par exemple des graviers, des fibres etc..

L'invention vise également une paroi en béton armé d'une structure, la paroi comprenant une armature métallique, un enrobage poreux, notamment en béton, recouvrant l'armature métallique et formant au moins une surface d'auscultation de la paroi et des témoins de corrosion, selon le premier aspect de l'invention, situés dans l'enrobage poreux entre l'armature métallique et la surface d'auscultation et dans lequel les témoins de corrosions sont répartis à différentes positions entre la surface d'auscultation et l'armature métallique.

Ainsi, l'utilisateur peut, en mesurant, à différentes positions, l'intensité du champ magnétique, conclure sur le degré d'infiltration d'agent pathogène dans l'enrobage à différentes positions de la structure pour si besoin effectuer une réparation préventive.

L'invention vise aussi une structure maritime comprenant une paroi en béton armé telle que celle décrite précédemment, dans laquelle la surface d'auscultation est externe et la paroi comprend une zone de marnage, dans laquelle au moins un des témoins de corrosion est situé entre la surface d'auscultation de la zone de marnage et l'armature.

L'invention permet ainsi d'offrir un moyen de mesure de la corrosion dans les zones des structures maritimes les plus exposées aux cycles de marnage. Une telle structure peut comporter plus de témoins dans la zone de marnage que dans les autres zones pour pouvoir augmenter le nombre d'échantillonnage de mesures et ainsi avoir une meilleure cartographie de la zone de marnage afin d'identifier les parties de la zone de marnage le plus infiltrées par des ions de chlorure.

L'invention vise aussi une structure terrestre comprenant une paroi en béton armé telle que décrite précédemment, dans laquelle la surface externe comprend au moins une zone accessible à l'eau et à l'air, dans laquelle au moins un des témoins de corrosion magnétiques est situé entre la surface externe et l'armature métallique.

L'invention vise aussi plusieurs procédés fabrication de la structure en mettant une mise en oeuvre différente pour l'installation des témoins de corrosion dans l'enrobage.

Un premier type de procédé fabrication de la structure est par la mise en oeuvre des témoins de corrosion est l'installation de ces témoins de corrosion par placement prédéterminé sur l'armature métallique ou entre celle-ci et la surface externe de la paroi en béton armé, par exemple avant l'enrobage.

L'invention vise ainsi un premier procédé de fabrication de paroi en béton armée comprenant un enrobage poreux, comprenant :
- une étape de montage et de positionnement d'une armature métallique,
- une étape de mise en place d'au moins un témoin de corrosion selon le premier aspect de l'invention, par le biais d'un organe de maintien amagnétique, notamment PVC, pour maintenir le témoin entre l'armature métallique et le coffrage,
- une étape de coffrage autour de l'armature métallique,
- après les trois étapes précédentes, une étape de coulage d'un liant , notamment comprenant du ciment, dans le coffrage contenant au moins un témoin de corrosion et l'armature métallique,
- une étape de décoffrage lorsque le liant est sec formant un enrobage poreux entourant l'armature métallique et les témoins de corrosion.

Le premier procédé de fabrication présente l'avantage de maîtriser parfaitement le positionnement des témoins de corrosion afin de simplifier et optimiser un procédé de suivi de l'état de corrosion de l'enrobage décrit plus tard et permettre un diagnostic fiable et robuste.

Un deuxième type de procédé de fabrication de la structure est par la mise en oeuvre des témoins de corrosion en utilisant le liant liquide tel que décrit précédemment, comprenant donc des témoins de corrosion, afin de réaliser l'enrobage à travers un coulage ou une projection du liant autour d'une armature.

L'invention vise ainsi un procédé de fabrication de paroi en béton armée comprenant :
- une étape de montage d'une armature métallique,
- une étape de coffrage autour de l'armature métallique et de coulage ou de projection, du liant liquide décrit précédemment sur l'armature métallique enrobant l'armature métallique en plaçant les témoins de corrosion dans le mortier liquide aléatoirement dans la paroi,
- et en ce que lorsque le liant est sec, le mortier liquide forme un enrobage poreux entourant l'armature métallique et les témoins de corrosion.

Selon un exemple de ce mode de réalisation comprenant l'étape de coffrage et de coulage, le procédé comporte en outre une étape de décoffrage.

Le deuxième type de procédé de mise en oeuvre des témoins de corrosion présente l'avantage de fabriquer la paroi en béton armée instrumentée sans rajouter la moindre étape de préparation. L'ajout des témoins de corrosion directement dans le liant permet d'optimiser les coûts de fabrications d'une telle paroi. Lorsque le liant est à l'état solide, il devient l'enrobage de la paroi enrobant à la fois les témoins et l'armature métallique de la paroi.

L'invention vise aussi un procédé de déduction de corrosion d'une paroi en béton armée décrite précédemment selon l'un des deux procédés de fabrication comprenant :
- une étape d'acquisition d'une donnée à un instant t d'une mesure d'une intensité du champ magnétique induit pour chaque témoin de corrosion magnétique à un point de référence de chaque témoin,
- une étape de comparaison de la donnée acquise et d'une donnée initiale précédemment acquise pour ce même point de référence correspondant à une intensité de champs magnétique de l'aimant du témoin à ce point de référence à un état neuf de la structure,
- une étape d'estimation de l'état de la corrosion en fonction de la comparaison en fonction d'un abaque ou d'une base de données, notamment courbes ou tableau de référence permettant d'identifier la corrosion en fonction de la différence entre la mesure et la donnée.

La mesure de l'intensité du champ magnétique par un lecteur à l'instant t est plus stable qu'avec un dispositif actif tel qu'un radar qui sera sensible à l'état hydrique , l'état physique, l'évolution de l'état poreux, et taux d'hydratation (fonction de la fabrication du béton) et la concentration d'ions chlorure.

La donnée initiale précédemment acquise peut être une intensité du champ magnétique induit précédemment mesurée à ce même point de référence ou précédemment estimée pour ce point de référence ou précédemment acquise lors de la fabrication de la paroi pour ce point de référence.

L'étape d'estimation de l'état de corrosion peut être fonction en outre de la connaissance de la profondeur du témoin.

L'abaque ou la base de données peut prendre en compte aussi le type de béton pour en estimer l'état de corrosion.

L'invention vise aussi un procédé de suivi du front de corrosion dans l'enrobage poreux d'une paroi telle que décrite précédemment, comprenant les étapes du procédé de suivi du front de corrosion décrit précédemment et :
- une étape d'acquisition de données initiales pour chaque témoin comprenant une donnée d'identification du témoin, la donnée initiale de l'intensité de champs magnétique de l'aimant du témoin au point de référence sur la surface d'auscultation, une donnée de localisation du point de références par rapport à la surface d'auscultation, une donnée d'une profondeur entre le point de référence sur la surface d'auscultation et le témoin,
- une étape de mesure de l'intensité du champ magnétique induit par le témoin à chaque point de référence à un instant t après l'acquisition de donnée initiale, dans lequel chaque mesure à l'instant t permet l'acquisition de la donnée à l'instant t de l'étape d'acquisition à un instant t du procédé de déduction de corrosion décrit précédemment,
- et une étape d'évolution différentielle entre les différentes estimations de l'état de corrosion estimé pour chaque témoin à chaque instant t.

Un tel procédé de suivi permet de réaliser une surveillance, à chaque point de référence, de l'évolution de l'intensité du champ magnétique induit par chaque témoin de corrosion magnétique correspondant et ainsi déduire et conclure sur un état de corrosion de la surface d'enrobage auscultée à l'instant t.

Un tel procédé permet d'établir à l'échelle d'une surface externe et sans mise en oeuvre complexe une référence à travers une cartographie 3D des niveaux d'intensité magnétique en chaque point de référence localisés par la présence d'un témoin de corrosion magnétique.

Selon un premier exemple de ce procédé de suivi du front de corrosion dans l'enrobage poreux d'une paroi telle que décrite précédemment, l'acquisition des données initiales pour chaque point de références comprend :
- une étape de mesure initiale de référence de l'intensité du champ magnétique induit par chaque témoin de corrosion magnétique détecté à différents emplacements de référence par rapport à la surface externe après durcissent des matériaux des structures armées,
- une étape d'identification, de localisation et d'enregistrement de l'emplacement de référence par rapport à la surface externe et d'acquisition de la mesure initiale de référence de l'intensité du champ magnétique induit par chaque témoin de corrosion détecté comme données initiales.

L'étape de mesure initiale permet de prendre en compte l'environnement magnétique perpétuelle à un point fixe de la structure. Par exemple un alternateur d'une centrale nucléaire peut générer une partie du champ magnétique du lecteur.

Selon un deuxième exemple de ce procédé de suivi du front de corrosion dans l'enrobage poreux d'une paroi telle que décrite précédemment, l'acquisition des données initiales pour chaque point de références comprend :
- une étape de mesure de l'orientation du champ magnétique provenant de l'aimant d'un témoin,
- une étape de détermination de la profondeur de l'aimant du témoin en fonction de son orientation et de son intensité et de l'inclinaison du témoin par rapport à la surface d'occultation de la structure réalisation en fonction de la mesure de l'orientation et de l'intensité du champ magnétique de l'aimant du témoin,
- une étape d'identification, de localisation et d'enregistrement de l'emplacement de référence par rapport à la surface externe et de la mesure initiale de référence de l'intensité du champ magnétique induit par chaque témoin de corrosion détecté,

Selon un troisième exemple de ce procédé de suivi du front de corrosion dans l'enrobage poreux d'une paroi telle que décrite précédemment, l'acquisition des données initiales pour chaque point de références comprend :
- une étape d'estimation des données initiales à partir de connaissance prédéterminée ou de mesure de la profondeur du témoin dans la structure et du type de témoin.

Cette étape nécessite de connaître l'emplacement des témoins et donc ne peut être utilisé que selon le deuxième type de procédé de fabrication de paroi en béton armée mais uniquement selon le premier type de procédé de mise en oeuvre alors que les premier et deuxième exemples peuvent être utilisés avec le premier ou deuxième procédé de fabrication de paroi décrit précédemment.

Le procédé de suivi du front de corrosion peut en outre comprendre :
- des étapes de mesures et d'enregistrement des mesures successives et différées dans le temps à différent instant t de l'intensité du champ magnétique induit par chaque témoin de corrosion détecté dans les mêmes emplacements identifiés dans l'étape d'identification et de localisation.

En outre, pour chaque point de référence, étapes de mesures et d'enregistrement des mesures successives et différées dans le temps à différent instant t comporte en outre la mesure de l'orientation du champ magnétique de l'aimant du témoin.

Le procédé de suivi de corrosion peut comprendre en outre une étape avant ou après la première mesure d'intensité de champs, une étape de mesure de l'orientation du champs magnétique provenant de l'aimant du témoin et une étape de détermination de la profondeur de l'aimant du témoin en fonction de son orientation et de son intensité et de l'inclinaison du témoin par rapport à la surface d'occultation de la structure réalisation en fonction de la mesure de l'orientation et de l'intensité du champs magnétique de l'aimant du témoin.

Le procédé de suivi du front de corrosion peut en outre comprendre à chaque instant t une étape d'évolution différentielle entre les différentes estimations de l'état de corrosion estimé pour chaque témoin à chaque instant t précédent pour en déduire une estimation potentielle d'évolution de la corrosion à un instant t+1.

Les étapes de mesures initiales et/ou successives et différées dans le temps de l'intensité du champ magnétique induit par chaque témoin de corrosion détecté sont réalisés par le biais d'un lecteur de champ magnétique, par exemple boucle d'induction magnétique, magnétomètre ou teslamètre. Le lecteur peut ainsi être passif, c'est-à-dire lit les champs magnétiques et ne transmet pas d'onde vers le témoin tel qu'un radar.

Les étapes d'identification, de localisation et d'enregistrement de l'emplacement de référence par rapport à la surface externe et d'enregistrement successives et différées dans le temps des mesures de l'intensité du champ magnétique induit peuvent être réalisés humainement ou informatiquement et automatiquement par le biais d'un dispositif d'enregistrement comprenant un microcontrôleur, un logiciel, une mémoire et un moyen de localisation, par exemple un GPS communicant avec le lecteur.

L'étape d'évaluation différentielle entre la mesure initiale de référence et les suivantes pour chaque emplacement enregistré peut être réalisé informatiquement par le dispositif d'enregistrement ou dans un programme dans lequel un opérateur a transmis les données ou encore manuellement par un opérateur par exemple à l'aide d'un tableau de référence ou d'un Abaque ou d'une base de données, notamment courbes ou tableau de référence permettant d'identifier la corrosion en fonction de la différence entre les deux mesures.

L'abaque ou la base de données peut prendre en compte aussi le type de béton pour en déduire de l'état de corrosion.

Selon une mise en oeuvre d'un de ces deux procédés, un drone comprend le lecteur permettant de réaliser les étapes de mesures initiales et successives et différées dans le temps de l'intensité du champ magnétique induit par chaque témoin de corrosion détecté. Le fait que le lecteur soit passif permet d'être plus léger par rapport au dispositif actif notamment en évitant de porter l'énergie nécessaire à la formation de l'onde magnétique ou induction magnétique.

Le drone peut être piloté par un opérateur ou être autonome par le biais d'un programme de navigation automatique. Le drone peut en outre comprendre le dispositif d'enregistrement ou communiquer avec le dispositif d'enregistrement.

Le témoin ou le liant liquide ou la structure ou le bâtiment ou le procédé de suivi de corrosion ou l'un des deux types de procédé de fabrication de la paroi en béton armé décrit précédemment selon l'invention peut également présenter une ou plusieurs des caractéristiques ci-dessous, considérées individuellement ou selon toutes les combinaisons techniquement possibles :
Dans un mode de réalisation du témoin, le témoin comporte en outre une couche de protection telle que du plastique entre l'aimant permanant et la couche corrodable pour protéger l'aimant permanant.

Dans un mode de réalisation du témoin, l'aimant permanant est enveloppé entièrement par la couche de protection pour le protéger.

Dans un mode de réalisation du témoin, le matériau ferromagnétique de la couche corrodable est du fer. Une telle matière est peu coûteuse et est hautement corrosif permettant de se détériorer rapidement pour pouvoir modifier le champ magnétique du témoin.

Le témoin a la taille d'un granula ou est plus petit qu'un granula du béton. Ainsi il n'entraine pas ou très peu de modification des caractéristiques de résistance des matériaux de la paroi par rapport à des capteurs comprenant de l'électronique qui sont plus grand.

Dans un mode de réalisation du témoin, l'aimant permanent est un parallélépipède, par exemple un pavé et en ce que la couche corrodable est aussi un parallélépipède, par exemple un pavé, le parallélépipède ayant une surface de contact parallèle à une surface de champs magnétique de l'aimant. Cette forme permet de diminuer la modification des caractéristiques de résistance des matériaux de la paroi. Selon un exemple de ce mode de réalisation, la surface de contact est inférieure à la surface de propagation.

Dans un exemple de ce mode de réalisation, l'aimant est un pavé à aimantation permanente supérieure ou égale à 1 Tesla, d'une épaisseur de 0.5cm et la surface de propagation du pavé comprend une dimension 1 cm * 1cm.

Dans un exemple de ce mode de réalisation, la couche corrodable est un pavé de fer ayant une surface de contact de 0.8cm * 0.8cm et une épaisseur de 0.3cm.

Cette taille permet d'être assez petit pour être proche de la taille d'un granulat du béton.

Dans un mode de réalisation du témoin, l'aimant permanant comprend au moins 90% de ferrite et présente une intensité de champ magnétique au contact de la couche corrodable d'environ 0,01 à 0.045 Tesla. Un tel aimant est peu coûteux et permet d'avoir un champs magnétique mesurable avec un lecteur externe à la structure (boucle d'induction magnétique, magnétomètre ou teslamètre ) à plusieurs centimètres.

Dans un autre mode de réalisation du témoin que le précédent, l'aimant permanant comprend au moins 90% de néodyme fer bore et présente une intensité de champ magnétique au contact de la couche corrodable d'environ 1 à 1,3 Tesla. Un tel aimant est assez puissant pour permettre d'avoir un champs magnétique mesurable avec un lecteur externe à la structure (boucle d'induction magnétique, magnétomètre teslamètre ) à plusieurs centimètres.

En effet, comme l'induction du champ magnétique (exprimé en Gauss ou Tesla) de l'aimant diminue à mesure que la distance s'accroît, en fonction de la structure, il peut être nécessaire d'avoir des témoins ayant une matière permettant d'avoir une intensité de champ magnétique à sa surface plus puissante.

Selon un mode de réalisation du témoin, la couche corrodable recouvre une face de l'aimant permanent possédant une polarité Sud et une polarité Nord.

Le champ magnétique est plus puissant directement à la surface au niveau des bords des pôles (au niveau des angles en cas d'un aimant parallélépipédique), et le plus faible au centre. Cependant près du bord, le champ magnétique diminue pourtant beaucoup plus vite que le champ sur l'axe magnétique central (frontière entre pôle nord et pôle sud) lorsque la distance s'accroît. A seulement quelques millimètres de la surface du pôle, le champ sur l'axe peut être plus puissant que près du bord.

La couche corrodable recouvre uniquement la face de l'aimant permanent possédant une polarité Sud et une polarité Nord.

Une mise en oeuvre de l'aimant dans le béton en mettant la frontière en vis-à-vis de la surface d'auscultation permet donc d'avoir une meilleure mesure de l'aimant du témoin de la surface d'auscultation.

Dans un mode de réalisation du témoin de corrosion, le témoin comprend deux couches de matériau ferromagnétique recouvrant les deux plus grandes surfaces de l'aimant comprenant les deux polarités.

Cela permet de pouvoir placer le témoin de corrosion dans deux positions.

Dans un autre mode de réalisation du témoin, le témoin comprend une couche corrodable recouvrant toutes les surfaces de l'aimant comprenant deux polarités.

Cela permet d'avoir plusieurs positions du témoin dans l'enrobage.

Dans un autre mode de réalisation du témoin, le témoin comprend un aimant cylindrique comprenant une polarité sud sur une portion du cylindre et une polarité nord sur une autre portion du cylindre, les deux portions de cylindre étant séparées par une frontière radiale par rapport à l'axe du cylindre de l'aimant. Dans cet exemple, la couche corrodable peut entourer la surface cylindrique de l'aimant. Ainsi, ce témoin comprend une pluralité de position.

Dans un mode de réalisation du liant liquide, le mortier comprend du ciment.

Le liant liquide permet de pouvoir avoir des témoins à différentes hauteurs dans la structure armée lorsque le mortier devient un enrobage à l'état solide. En effet, par exemple dans le cas du béton à base de ciment, la très faible viscosité du béton permet au moment de la fabrication de la structure armé d'éviter que les témoins ne coulent ou remontent à la surface.

L'avantage du ciment est qu'il profite d'une excellente résistance à la compression. Il sèche également plus vite que la plupart des autres solutions.

Un tel enrobage est poreux, les témoins permettent ainsi d'envoyer une information sur l'infiltration des agents pathogènes, tel que les ions de chlorure, en modifient l'intensité du champ magnétique généré par l'aimant en fonction de l'état de corrosion de la couche corrodable.

Selon un exemple le mortier est réalisé pour former du béton projeté.

Dans une variante de cet exemple du liant liquide, le liant est réalisé pour être coulé dans un coffrage.

Selon un mode de réalisation du liant, le mortier est du béton, notamment à base de ciment.

Dans un mode de réalisation de la paroi en béton armé, les témoins de corrosion sont, répartis à différentes profondeurs, entre la surface d'auscultation et l'armature.

Cela permet de pouvoir réaliser une cartographie en trois dimensions de l'infiltration des agents pathogènes, par exemple des ions de chlorure, pour ainsi soit réaliser de la maintenance préventive pour empêcher une propagation de ces agents pathogènes dans l'enrobage vers l'armature, soit pour identifier et budgétiser une maintenance d'une réparation à réaliser.

Selon un mode de réalisation de la paroi en béton armé, la paroi en béton armé comprend des organes de maintien fixés à l'armature et aux témoins pour maintenir les témoins.

Ces organes de maintien permettent de maintenir en position les témoins par rapport à l'armature métallique pendant l'étape d'enrobage d'un mortier liquide. Le mortier liquide devient l'enrobage après l'étape d'enrobage sur la structure métallique et lorsque le mortier est à l'état solide.

Selon un exemple, les organes de maintien sont rigides pour maintenir l'inclinaison des témoins lors d'une étape d'enrobage.

Selon un exemple, les organes de maintien sont des fils, notamment en nylon, dont chaque fil est fixé à une couche de protection du témoin et à deux parties fixes, par exemple au coffrage et à l'armature ou à une barre au-dessus du coffrage fixé par exemple au coffrage et une barre au fond du coffrage.

Selon un mode de réalisation de la paroi en béton armé, la structure comprend plusieurs types de témoins, chaque témoin d'un type de témoins est identique, dans laquelle les types de témoins sont différents les uns des autres au moins en ce que les aimants ou/et les couches corrodables des types de témoins comprennent un volume différent, les types de témoins comprenant des aimants ou/et des couches plus volumineux sont plus éloignées de la surface d'occultation que les type de témoins proche de la surface d'auscultation. Cela permet d'avoir une meilleure précision des mesures de l'intensité du champ magnétique en fonction de la profondeur des témoins par rapport à la surface d'auscultation et ainsi une meilleure évaluation de l'infiltration des agents pathogène dans la paroi en béton armé.

Selon une variante du mode de réalisation précédent de la paroi en béton armé, les témoins sont tous identiques. Dans cet exemple, l'intensité du champ magnétique des témoins est suffisante pour que le témoin, le plus proche de l'armature entre l'armature et la surface d'auscultation, génère un champ magnétique détectable à la surface d'auscultation.

Selon un mode de réalisation du procédé de suivi du front de corrosion, le procédé comprend une étape de cartographie de la structure avant l'étape de la première mesure de référence.

Par exemple, l'étape de cartographie est réalisée en identifiant la position de l'armature par rapport à un point de référence.

Selon un autre exemple, l'étape de cartographie consiste en une réalisation en trois dimensions de l'armature métallique la plus proche de la surface d'auscultation et des positions des témoins par rapport à cette armature métallique.

Selon un exemple, l'étape de cartographie est réalisée en identifiant la position d'une pluralité de témoin par rapport à la surface d'auscultation.

Le procédé de suivi selon les deux derniers exemples est réalisé lorsque le procédé de fabrication du support est réalisé selon le premier type de procédé de fabrication de la paroi en béton armé. L'étape de cartographie peut en outre comporter des identifications de type de témoins dans le cas de la paroi en béton armé comprenant différents types de témoins décrites précédemment

Selon une variante de ces deux derniers exemples, l'étape de cartographie comprend en outre une étape de détermination de la profondeur et de l'orientation du témoin calculée en fonction de la première mesure. Une telle étape peut notamment être réalisée lorsque la paroi en béton armé comprend des témoins identiques et un procédé de fabrication de paroi en béton armé selon le deuxième type de l'invention. En effet, lorsque la paroi en béton armé est fabriquée selon le deuxième type de procédé de fabrication, les témoins sont à différentes profondeurs et les premières mesures peuvent permettre de calculer la profondeur de l'aimant pour l'intégrer dans l'étape de cartographie.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- Les figures 1a et 1b représentent schématiquement une coupe d'un témoin selon un premier mode de réalisation respectivement dans un état neuf et un état de corrosion avancé.
- Les figures 2a et 2b représente une simulation du champ magnétique d'un témoin de l'exemple du premier mode de réalisation respectivement dans un état neuf et un état de corrosion total, dans une portion d'une paroi en béton armé.
- La figure 3 représente un schéma de principe d'une coupe d'une portion d'une paroi en béton armé comprenant des témoins à différentes positions et différentes profondeurs.
- La figure 4 est un graphique comprenant en ordonnée l'intensité en Tesla d'un champs magnétique mesuré par un lecteur externe à la structure à une surface d'occultation d'une paroi en béton armé et en abscisse différentes épaisseurs de la couche corrodable d'un témoin générant le champ magnétique mesuré.
- La figure 5 représente un tableau représentant l'évolution du champ magnétique induit B à la surface d'une dalle de béton en fonction de l'épaisseur de la couche corrodable d'un témoin et en fonction de différentes caractéristiques diélectriques de l'enrobage en béton.
- La figure 6 représente un graphique représentant la valeur différentielle de l'intensité du champ magnétique en Tesla en fonction de la quantité de ions de chlorure.

Pour plus de clarté, les éléments identiques ou similaires sont repérés par des signes de référence identiques sur l'ensemble des figures.

### DESCRIPTION DETAILLEE

Les figures sont présentées à titre indicatif et nullement limitatif de l'invention.

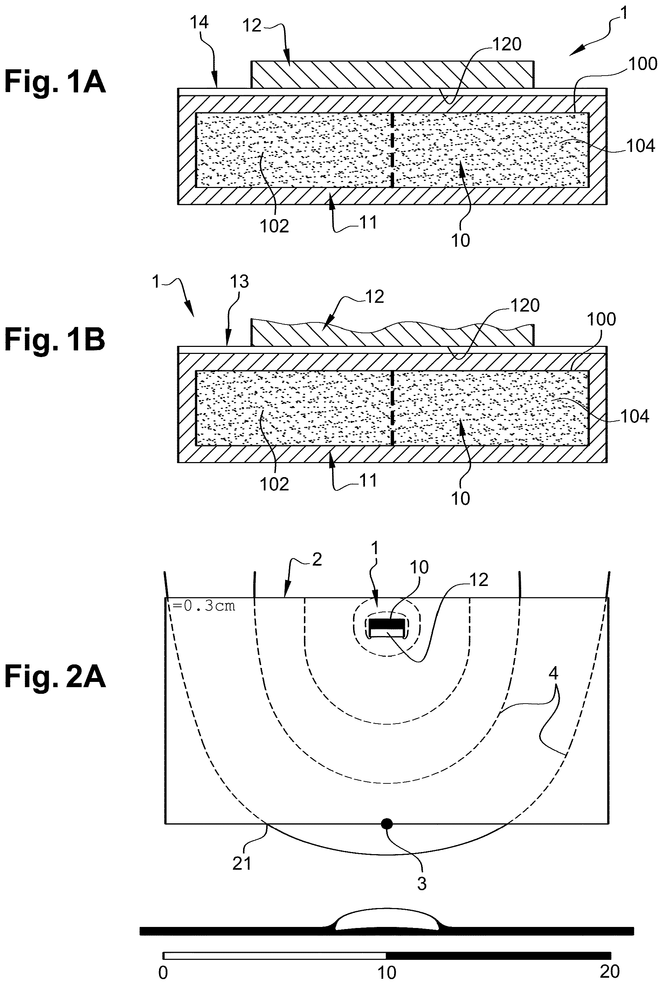

[Fig. 1A] représente un témoin de corrosion 1, appelé dans la suite témoin 1, selon un mode de réalisation comprenant une couche corrodable 12 et un aimant 10 solidaire de la couche corrodable 12.

Dans ce mode de réalisation le témoin 1 comprend en outre une couche de protection 11 entourant l'aimant 10 pour le protéger. La couche de protection 11 peut être comme dans cet exemple une portion de surmoulage en plastique sur l'aimant 10 mais peut être par exemple aussi une boite fermée, par clipsage par exemple, dans laquelle l'aimant 10 est situé et peut y être calé. Le témoin 1 comprend, dans cet exemple, une colle 13 entre la couche corrodable 12 et la couche de protection 11. Selon un autre exemple, le surmoulage est aussi réalisé sur la couche corrodable 12. Selon un autre exemple non représenté, le témoin 1 peut avoir la couche corrodable 12 fixée directement contre une surface de propagation de l'aimant 10 et peut soit être dépourvu de couche de protection ou soit avoir une couche de protection 11 entourant le reste des surfaces de l'aimant 10 (c'est-à-dire entourant l'aimant 10 sauf la portion de la surface de propagation en contact avec la couche de ferromagnétique). La couche de protection 11 permet ainsi de protéger l'aimant contre des agents pathogènes.

Le témoin1 a une forme de parallélépipède et en l'occurrence a une forme de pavé dans ce mode de réalisation mais pourrait aussi avoir une autre forme, par exemple en forme de cylindre.

L'aimant 1 a une forme de parallélépipède et en l'occurrence a une forme de pavé mais pourrait aussi avoir une autre forme comme par exemple une forme de cylindre notamment dans le cas d'un témoin cylindrique.

Dans ce mode de réalisation, l'aimant 10 comprend une surface de propagation 100 visible en coupe sur la figure 1A. L'aimant 10 comprend une polarité positive 102 et une polarité négative 104. La surface de propagation 100 de l'aimant 10 comprend une face de la polarité positive 102 et une face de la polarité négative 104. Sur les figures 1A et 1B, des pointillée montre la frontière entre les deux polarités. La surface de propagation 100 est recouverte par une surface de contact 120 de la couche corrodable 12. La surface de propagation 100 de l'aimant 10 est en l'occurrence l'une des deux plus grandes faces de l'aimant ayant les deux polarités de l'aimant 10. On peut dire que la surface de propagation 100 supporte la couche corrodable 12. La couche corrodable 12 est en matériau ferromagnétique et est en l'occurrence en fer. Ainsi, le fait que la couche corrodable 12 comprenne un matériau ferromagnétique en vis-à-vis de cette surface de propagation 100 de l'aimant 10 permet de modifier le champ magnétique sur sa plus grande face détectable.

Dans ce mode de réalisation, la surface de propagation 100 comprend en l'occurrence une valeur de 1 cm2 mais peut comprendre une surface d'une valeur comprise entre 0.5cm2 et 5cm2 par exemple. Dans ce mode de réalisation, la surface de propagation 100 a une forme carrée mais pourrait être un rectangle ou encore une autre forme, par exemple un disque ou une portion de cylindre dans le cas d'un aimant cylindrique.

L'épaisseur de l'aimant, dans cet exemple, est de 0.5 centimètres mais peut être plus petit ou plus grand par exemple entre 0.3 cm et 2 cm d'épaisseur.

Plus l'épaisseur de l'aimant est grande et/ou plus sa surface de propagation est grande, plus son champ magnétique sera détectable facilement ainsi que sa variation.

La couche corrodable est en outre de même forme que celle de l'aimant en l'occurrence un pavé. Dans cet exemple une surface de contact 120 plus petite que celle de la surface de propagation 100 de l'aimant 10. En l'occurrence, la surface de contact fait 0.8cm*0.8cm, soit, dans cet exemple, une surface carrée plus petite de trente-six pourcents que la surface carrée de la surface de propagation 100 de l'aimant 10.

Un tel volume de témoin réduit les modifications des caractéristiques d'un enrobage dans une paroi d'une structure par rapport à un témoin de plus gros volume et est en outre moins cher.

[Fig. 1B] représente une coupe du témoin 1 identique à celui de la figure 1A sauf en ce que la couche corrodable 12 a subi une corrosion.

La couche corrodable ayant subi une corrosion réduit la quantité de matériau ferromagnétique non corrodé ce qui provoque une réduction de l'intensité du champ magnétique de l'aimant 10 par rapport à l'intensité du champ magnétique généré par l'aimant 10 du témoin 1 comprenant une couche corrodable 12 à l'état neuf.

[Fig. 2A] représente une simulation du champ magnétique du témoin 1 dans l'état neuf de la figure1 dont l'aimant 10 comprend une densité de flux magnétique résiduel de 1 Tesla.

La simulation du champ magnétique est réalisée en réalisant une boîte 2 simulant la perméabilité d'un enrobage de béton pour simuler le témoin dans une paroi en béton. La simulation a été réalisée avec une permittivité relative de 3 εr et une conductivité électrique de 0.1 Siemens par mètre. La simulation prend en compte aussi la permittivité de la couche de protection 13.

La surface de propagation 100 de l'aimant 10 du témoin 1 est simulée pour être à huit centimètres d'une surface d'auscultation 21 de la boîte 2 simulant une surface d'auscultation dans cet exemple d'un support.

Le champ magnétique, généré par l'aimant 10 du témoin 1 à l'état neuf, est représenté par des ondes 4. Pour rappel, le témoin 1 comprend, dans cet exemple de ce mode de réalisation à l'état neuf, une épaisseur de sa couche corrodable 12 égale à 0.3cm.

Un lecteur externe passif à la paroi de la structure en l'occurrence un magnétomètre 3 est représenté schématiquement par un point sur la surface d'auscultation 21 de la boite 2 à béton. Dans ce mode de réalisation, la surface de propagation 100 est parallèle à la surface d'auscultation 21 et le magnétomètre 3 est situé au croisement de la surface d'auscultation et d'un plan passant par la frontière de l'aimant (c'est-à-dire perpendiculaire à la surface de propagation 100 et au centre de celle-ci). Le magnétomètre peut être un teslamètre.

La simulation indique que la valeur de l'intensité du champ magnétique mesurée au point représentant le magnétomètre 3 est de 0.00026 Tesla soit 2.6 Gauss.

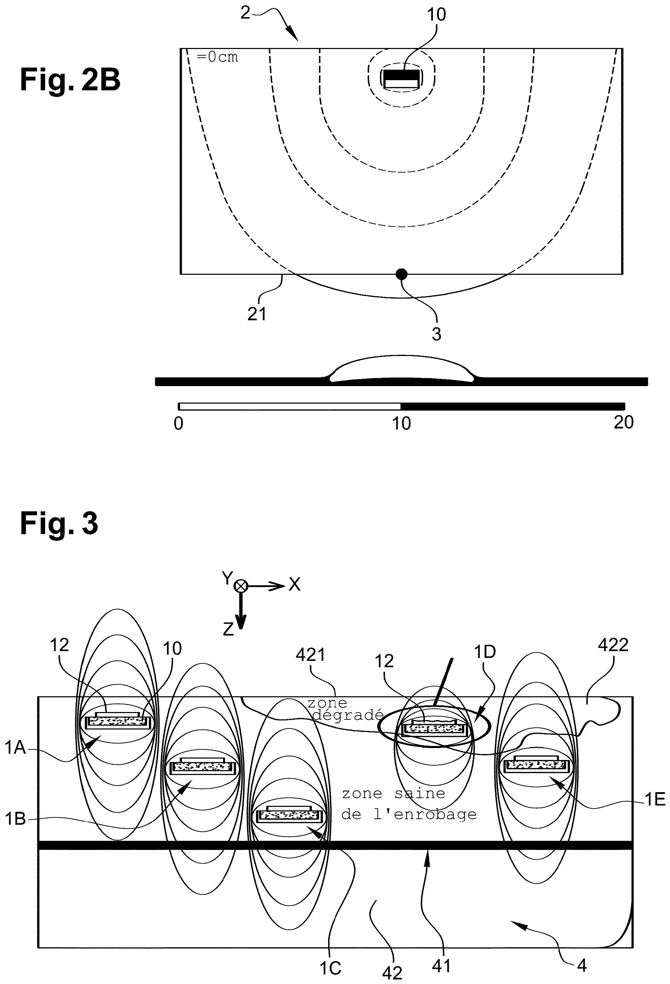

[Fig. 2B] représente la même simulation de champ magnétique généré par l'aimant 10 du témoin 1 sauf en ce que dans cette simulation, la couche corrodable est supprimée correspondant à une couche de matériau complètement corrodée.

La simulation indique que la valeur de l'intensité du champ magnétique mesurée au point représentant le magnétomètre 3 est de 0.00022 Tesla soit 2.2 Gauss.

Ainsi on peut voir que l'épaisseur de la couche de ferromagnétique modifie l'intensité du champ magnétique mesurée par le magnétomètre.

[Fig. 3] représente un schéma de principe d'une coupe d'une portion d'une paroi en béton armée 4 d'une structure du génie civil, comprenant des témoins 1 à différentes positions dans la paroi en béton armée 4.

La figure 3 comprend un repère X, Y, Z, dont la coupe a été effectuée dans le plan X, Z.

La portion de la paroi en béton armée, 4 appelée ensuite paroi 4, comprend une armature 41 et un enrobage poreux 42.

Dans un exemple de ce mode de réalisation, les témoins 1 de la paroi 4 sont identiques à celui de l'exemple de la figure 1A. En l'occurrence, chaque témoin 1 comprend un témoin 10 ayant une densité de flux magnétique de 1 Tesla. Sur la figure 3, des lignes, entourant chaque témoin de la portion de la paroi 4, représentent le champ magnétique à différentes valeurs d'intensité.

Selon un autre exemple non représenté, les témoins 1 peuvent être différents en ce que des témoins 1 comportent un aimant ayant une valeur de densité de flux magnétique différente que celles de d'autres aimants, par exemple en étant de taille différente ou de composition différent. Par exemple, la paroi 4 comporte trois type de témoins, chaque type de témoin 1 est situé à un des trois étages décrits plus bas et les témoins de chaque type sont identiques.

La paroi 4 comprend une surface d'osculation 421, en l'occurrence dans le plan X, Y.

Le plan X, Y représente la position des témoins et la direction Z représente la profondeur des témoins par rapport à une surface d'auscultation. Les témoins 1 sont, dans cet exemple de mode de réalisation, situés à différentes profondeurs par rapport à de la paroi 4. Chaque témoin 1 est orienté dans l'enrobage poreux 42 tel que la couche de matériaux ferromagnétique 12 est plus proche de la surface d'auscultation que l'aimant 10. En l'occurrence, dans cet exemple, les témoins 1 sont tous situés entre la surface d'auscultation 421 et l'armature 41. La paroi 4 peut comprendre des centaines de témoins en fonction de l'air de la surface d'auscultation.

La paroi 4 pourrait aussi comporter d'autres témoins 1 dans l'enrobage poreux 42 entre une armature 41 et une autre surface d'auscultation non représentée.

La paroi 4 comporte en l'occurrence plusieurs armatures dont une seule est représentée dans la portion de la paroi 4. Les armatures 41 sont en l'occurrence à différentes profondeurs par rapport à la surface d'auscultation.

Le procédé de fabrication de cette paroi 4 est selon un premier type de procédé consistant à disposer les témoins 1, de manière prédéterminée, avant d'enrober l'armature 41 avec l'enrobage 42.

Par exemple, le procédé de fabrication de la paroi 4 comprend une étape de montage et de positionnement d'une armature métallique, une étape de coffrage autour de l'armature métallique, une étape de mise en place de plusieurs témoins 1 par exemple à l'aide d'un fil en nylon fixé à la couche de protection du témoin pour maintenir le témoin entre l'armature métallique et le coffrage. Le fil de nylon peut être fixé à l'armature ou/et au coffrage ou encore à une plaque au-dessus du coffrage ou de l'armature. L'ordre de ces trois étapes n'a pas d'importance. Lorsque ces trois étapes sont réalisées, le procédé comporte en outre une étape de coulage ou de projection du béton dans le coffrage enrobant les témoins et l'armature métallique. Lorsque l'enrobage est sec, le procédé comprend une étape de décoffrage.

Dans ce mode de réalisation, au moins un témoin est situé entre la surface d'auscultation 421 et l'armature 41 la plus proche de la surface d'auscultation 41. Cela permet ainsi de prévenir l'utilisateur, d'une infiltration d'agent pathogène dans l'enrobage 42 du béton.

La coupe de la portion de la paroi 4 représente cinq témoins numérotés 1A, 1B, 1C, 1D et 1E qui s'étendent les uns après les autres selon la direction X. Dans cet exemple, la paroi 4 comprend trois étages de témoins 1 mais la paroi 4 pourrait en comporter qu'un seul étage ou deux ou plus que trois étages.

Dans cette portion de la paroi 4, le premier témoin 1A et le quatrième témoin 1D sont situés au premier étage, le deuxième témoin 1B et le cinquième témoin 1E sont situés au deuxième étage, et enfin le troisième témoin 1C est situé au dernier étage.

Le premier étage est plus proche de la surface d'auscultation 421 que de l'armature 41 et le dernier étage est au contraire plus proche de l'armature 41 que de la surface d'auscultation 421. Le deuxième étage est situé entre le premier et deuxième étage et est en l'occurrence situé au milieu entre la surface d'auscultation 421 et la première armature 41.

Autrement dit, les témoins 1 sont arrangés dans le plan XZ par des groupes d'escaliers successive selon la direction V, comprenant en l'occurrence trois témoins 1, en l'occurrence trois étages descendant dans la direction X les uns après les autres. Les témoins 1 pourrait aussi être dans le plan XZ par groupe en V de cinq témoins, c'est-à-dire un escalier qui, dans la direction X, descend du premier étage au troisième étage puis remonte de ce troisième étage vers le premier étage. Selon un autre mode de réalisation non représenté, les témoins peuvent être alignés en groupe de 7 témoins en W dans le plan XZ, dans lequel dans la direction X, le premier témoin et le dernier témoin du groupe sont au premier étage, les deuxième, quatrième et sixième témoins 1 sont au deuxième étage et les troisième et cinquième témoins 1 sont au troisième étage.

Selon encore un autre mode de réalisation, les témoins 1 sont situés aléatoirement en profondeur et en position.

Bien entendu, la paroi 4 comprend d'autres témoins notamment dans la direction Y. Par exemple, dans cet exemple, les témoins 1 sont alignés dans le plan YZ de la même façon que dans le plan YX, c'est-à-dire en groupe de trois témoins et étages en descendant dans la direction Y mais peuvent aussi être tous alignés à la même hauteur ou encore par groupe de trois témoins et étages en escalier montant dans la direction Y.

La paroi 4 peut comporter à sa surface d'auscultation, une couche imperméable ; non représentée ; pour empêcher l'infiltration d'agent pathogène. Cependant cette couche imperméable peut comporter une fissure du fait par exemple d'un choc mécanique ou d'une malfaçon ou bien encore d'une vibration de la structure par exemple une vibration sismique. La couche d'imperméabilité peut alors laisser des agents pathogènes rentrés dans l'enrobage poreux 42 de la paroi 4.

Dans la portion de la paroi 4, une partie dégradée 422 de l'enrobage poreux 42 est endommagée par des agents pathogènes infiltrés dans l'enrobage poreux 42.

Les agents pathogènes sont, en l'occurrence, des ions de chlorures de sodium et la paroi 4 est une paroi en béton armée d'une structure marine, par exemple une digue ou un pont.

La portion de paroi 4 est par exemple une portion de zone de marnage du bâtiment marine. La surface d'auscultation 422 est donc dans cet exemple vertical ( la figure 3 est donc tournée à 90° et la direction X est verticale).

Le quatrième témoin 1D est situé dans cette partie dégradée 422, les ions de chlorures ont corrodées la couche corrodable 12 qui se dégrade. La dégradation de la couche corrodable 12 entraine une diminution de l'épaisseur du matériau ferromagnétique non corrodée et donc diminue l'intensité du champ magnétique à la surface d'auscultation 421. Les autres témoins 1 ont chacun leur couche corrodable 12 non dégradée.

Ainsi, il est possible de réaliser un procédé de suivi du front de corrosion en réalisant à un premier moment, lorsque l'enrobage est sec et avant qu'une partie de la paroi 4 soit dégradée, de réaliser à l'aide d'un magnétomètre du côté de la surface d'auscultation 21 une étape de détection d'un champ magnétique provenant de la paroi correspondant à un champ magnétique d'un témoin 1 et pour chaque détection de champ magnétique d'un témoin, une étape de première mesure de référence de l'intensité du champ magnétique induit du témoin, une étape de localisation d'un point de référence de la mesure et une étape d'enregistrement de la localisation et de l'intensité du champ magnétique mesuré au niveau du point de référence.

Ainsi pour chaque témoin 1 détecté, on enregistre la localisation et la première mesure de l'intensité du champ magnétique fournit par le témoin 1 lorsque la paroi 4 est encore en bonne état. Le point de référence peut être distant de la surface d'auscultation ou situé sur la surface d'auscultation 421.

Ensuite, le procédé de suivi du front de corrosion réalise à plusieurs moments successifs et différés dans le temps, pouvant être plusieurs mois ou années entre chaque moment, une étape consistant à mesurer, à chaque localisation du point de référence enregistré, l'intensité du champ magnétique et une étape d'évaluation différentielle entre cette nouvelle mesure à celle de la première mesure de référence enregistrée à chaque localisation du point de référence enregistré.

La figure 3 représente la portion de la paroi 4 au deuxième moment, par exemple trois ans après le premier moment de la première mesure de référence des témoins identifiés. A ce deuxième moment, les témoins 1A, 1B, 1C et 1E n'ont pas subi ou ont subi très peu de corrosion par rapport à la première mesure mais la couche corrodable du quatrième témoin 1D est corrodée par rapport au premier moment de la première mesure entrainant une forte variation du champ magnétique au point de référence.

Ainsi, lors de l'étape d'évaluation différentielle, la comparaison des deux mesures est identique ou très proche (moins de 0. 01 milliteslas de différence entre les deux mesures) pour les témoins 1A, 1B, 1C et 1E et montre une différence entre les deux mesures du quatrième témoin 1D de plus de 0.01 milliteslas. Il est donc possible d'en déduire que la couche corrodable 12 est plus fine que lors de la première mesure (épaisseur inférieure au moment de la première mesure de référence) et donc en conclure qu'il y a une infiltration d'agent pathogène responsable de la corrosion de la couche corrodable 12 du quatrième témoin 1D. En fonction de la différence de mesure, l'utilisateur ou la machine peut en conclure à l'aide de tableau ou graphique de référence, l'état de corrosion de la couche corrodable 12.

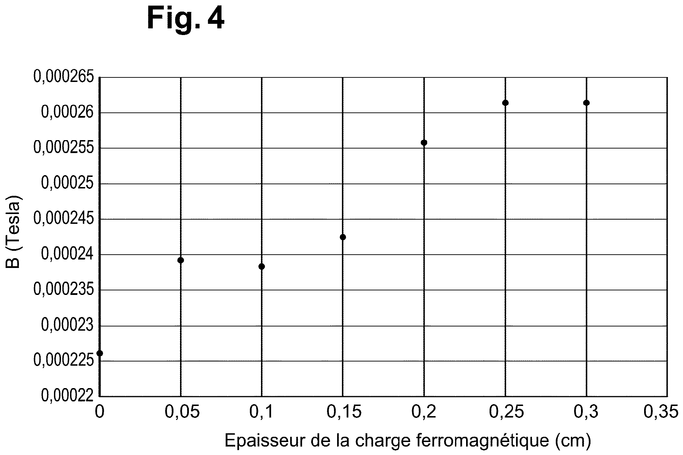

[Fig. 4] représente un graphique de référence du témoin 1 mesuré à la surface de la surface d'auscultation en fonction de la corrosion de la couche corrodable 12. En abscisse, le graphique représente l'épaisseur de la couche de ferromagnétique 12. Plus la corrosion de la couche de ferromagnétique est avancée, plus l'épaisseur de la couche de matériau de corrosion est réduite. En ordonnée, le graphique de référence représente l'intensité du champ magnétique mesuré à la surface de la surface d'auscultation et au droit de la frontière du témoin 1.

Le graphique de référence, en l'occurrence, a été réalisé avec un témoin 1 de l'exemple de la figure 1 et selon une profondeur de 8cm par rapport à la surface d'auscultation comme dans la simulation des figures 2a et 2b. On peut voir avec ce graphique que l'évolution de l'intensité du champ magnétique au point de référence évolue en escalier et que tous les un millimètre de perte de matière ferromagnétique non corrodée de la couche corrodable, l'intensité du champ magnétique varie d'au moins 0.01 millitesla, en l'occurrence dans cet exemple, 0.04 millitesla pour une différence de 3mm d'épaisseur de charge magnétique.

Ainsi l'utilisateur, dans l'exemple représenté de la figure 3, peut en conclure que la partie dégradée 422 n'a pas encore atteint, dans cette coupe de la portion de la paroi, la profondeur de l'armature 41. En effet cette déduction peut être fait à l'aide des mesures d'intensité du champ magnétique, des troisième et cinquième témoins 1C, 1E plus proche de l'armature 41 que le quatrième témoin 1D, qui permet de déduire que leur couche corrodable n'a pas eu de réduction de 1mm de matière ferromagnétique non corrodée.

Comme déjà dit, la paroi 4 comprend aussi d'autres témoins dans la direction Y permettant aussi de conclure si la partie endommagée a atteint ou pas atteint l'armature dans la direction Y.

L'utilisateur peut ainsi soit réaliser une maintenance sur cette partie dégradée ou soit attendre qu'une couche corrodable 12 d'un témoin du deuxième étage se corrode.

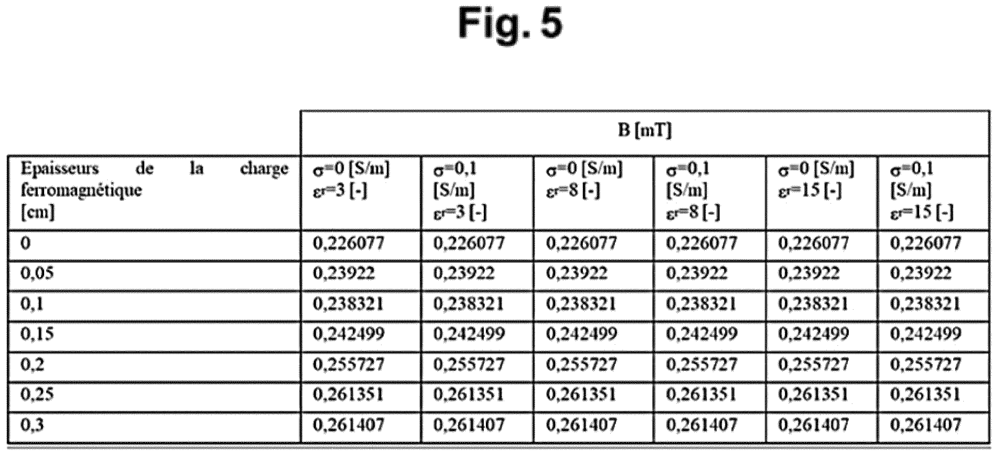

[Fig. 5] représente un tableau montrant des mesures d'intensité de champ magnétique à la surface de surface d'auscultation de différents enrobages et épaisseurs d'une couche corrodable d'un témoin 1. Les colonnes du tableau représentent différentes caractéristiques diélectriques d'enrobage de béton et les lignes représentent différentes épaisseurs de la couche corrodable de témoin. Ainsi chaque case représente une mesure d'intensité du champ magnétique en fonction d'une épaisseur de la couche corrodable et en fonction d'une caractéristique diélectrique d'un enrobage. On peut voir que l'intensité du champ magnétique varie en fonction de l'épaisseur de la couche corrodable mais pas ou inférieure à 0.000001 mT en fonction de ses différents types d'enrobage.

L'invention permet donc de fonctionner avec différentes parois d'enrobage différent de manière simple puisque les types d'enrobages n'influent pas ou peu sur les mesures d'intensité du champ magnétique.

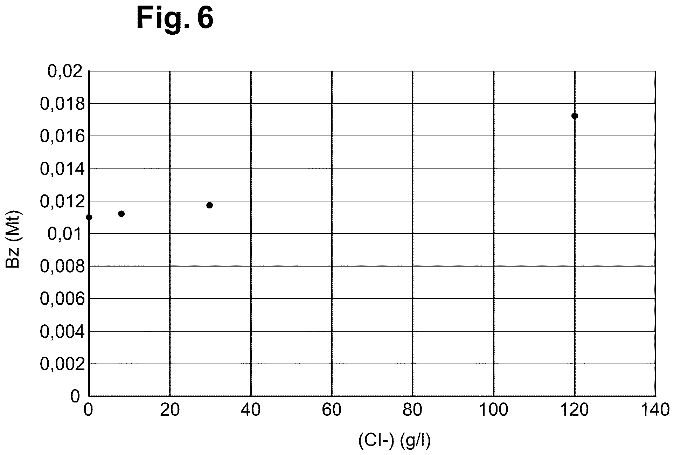

[Fig. 6] représente un graphique représentant les variations de mesure de l'intensité du champ magnétique en composante verticale Z en fonction de la quantité d'ions de chlorures pour corroder lors de test expérimentaux les couches de matériau ferromagnétique 12 d'un témoin 1 de la figure 1 à une profondeur de 8cm dans un enrobage poreux ayant l'une des caractéristiques diélectriques du tableau de la figure 5.

Le graphique représente en ordonnée, les différences de valeurs mesurées d'intensité de champs magnétique avec un magnétomètre à un point de référence et en abscisse la quantité d'ions de chlorures en g/l pour corroder les couches de matériau ferromagnétique.

On peut voir que la quantité d'ions de chlorures influe de 0.011 millitesla à 0.017 millitesla sur les valeurs mesurées dans la composante verticale. Ainsi, les mesures d'intensité de champ magnétique réalisées par le magnétomètre peuvent permettre de conclure sur l'état de corrosion dans la paroi.

## Revendications

1. Liant dans un état liquide, notamment le béton hydraulique, comprenant un mortier et des témoins de corrosion (1A, 1B, 1C, 1D, 1E) comprenant au moins un aimant permanent (10) générant un champ magnétique, et une couche corrodable (12) par des agents pathogènes, notamment les ions chlorures, la couche corrodable (12) étant solidaire de l'aimant, la couche corrodable (12) comprenant un matériau ferromagnétique permettant de modifier le champ magnétique généré par l'aimant (10) en fonction de l'état de corrosion du matériau ferromagnétique de la couche corrodable (12) et en ce que la couche corrodable (12) recouvre une face de l'aimant permanent (10) possédant une polarité Sud (102) et une polarité Nord (104) le liant devenant un enrobage poreux (42) à l'état solide et étant destiné à devenir un enrobage (42) d'une paroi en béton armée (4).

2. Liant dans un état liquide selon la revendication 1, dans lequel le témoin comprend une couche de protection (11), telle que du plastique, entre l'aimant permanent (10) et la couche corrodable (12) pour protéger l'aimant permanent (10).

3. Liant dans un état liquide selon la revendication précédente, dans lequel le matériau ferromagnétique de la couche corrodable (12) est du fer.

4. Liant dans un état liquide selon l'une quelconque des revendications précédentes, dans lequel l'aimant permanent (10) comprend au moins 90% de ferrite et présente une intensité de champ magnétique au contact de la couche corrodable (12) d'environ 0,01 à 0.045T

5. Paroi en béton armée (4) d'une structure comprenant :
- une armature métallique (41),
- un enrobage poreux (42), notamment en béton, recouvrant l'armature métallique (41) et formant au moins une surface d'auscultation (421) de la paroi (4), et
- des témoins de corrosion (10) comprenant au moins un aimant permanent (10) générant un champ magnétique, et une couche corrodable (12) par des agents pathogènes, notamment les ions chlorures, la couche corrodable (12) étant solidaire de l'aimant, la couche corrodable (12) comprenant un matériau ferromagnétique permettant de modifier le champ magnétique généré par l'aimant (10) en fonction de l'état de corrosion du matériau ferromagnétique de la couche corrodable (12) et en ce que la couche corrodable (12) recouvre une face de l'aimant permanent (10) possédant une polarité Sud (102) et une polarité Nord (104), situés dans l'enrobage poreux (42) entre l'armature métallique (41) et la surface d'auscultation (421) et dans lequel les témoins de corrosion (1) sont répartis à différentes positions, entre la surface d'auscultation (421) et l'armature métallique (41).

6. Paroi en béton armée (4) d'une structure selon la revendication 5, dans lequel le témoin de corrosion (1) comprend une couche de protection (11), telle que du plastique, entre l'aimant permanent (10) et la couche corrodable (12) pour protéger l'aimant permanent (10).

7. Paroi en béton armée (4) d'une structure selon la revendication précédente, dans lequel le matériau ferromagnétique de la couche corrodable (12) est du fer.

8. Paroi en béton armée (4) d'une structure selon l'une quelconque des revendications 5 à 7 dans lequel l'aimant permanent (10) comprend au moins 90% de ferrite et présente une intensité de champ magnétique au contact de la couche corrodable (12) d'environ 0,01 à 0.045T

9. Structure maritime comprenant une paroi en béton armée (4) selon l'une des revendication 5 à 8, dans lequel la surface d'auscultation (421) est externe et la paroi comprend au moins une zone de marnage, dans lequel au moins un des témoins de corrosion (1) est situé entre la surface d'auscultation externe de la zone de marnage et l'armature métallique (41).

10. Procédé de déduction de corrosion d'une paroi en béton armée selon l'une des revendications 5 à 8 comprenant :
- une étape d'acquisition d'une donnée à un instant t d'une mesure d'une intensité du champ magnétique induit pour chaque témoin de corrosion magnétique à un point de référence de chaque témoin,
- une étape de comparaison de la donnée acquise et d'une donnée initiale précédemment acquise pour ce même point de référence correspondant à une intensité de champs magnétique de l'aimant du témoin à ce point de référence à un état neuf de la structure,
- une étape d'estimation de l'état de la corrosion en fonction de la comparaison en fonction d'un abaque ou d'une base de données, notamment courbes ou tableau de référence permettant d'identifier la corrosion en fonction de la différence entre la mesure et la donnée.

11. Procédé de suivi du front de corrosion dans un enrobage poreux (42) d'une paroi (4) selon l'une des revendications 5 à 8, comprenant les étapes du procédé de déduction de la revendication 10 et :
- une étape d'acquisition de données initiales pour chaque témoin comprenant une donnée d'identification du témoin, la donnée initiale de l'intensité de champs magnétique de l'aimant du témoin au point de référence sur la surface d'auscultation, une donnée de localisation du point de références par rapport à la surface d'auscultation, une donnée d'une profondeur entre le point de référence sur la surface d'auscultation et le témoin,
- une étape de mesure de l'intensité du champ magnétique induit par le témoin à chaque point de référence à un instant t après l'acquisition de donnée initiale, dans lequel chaque mesure à l'instant t permet l'acquisition de la donnée à l'instant t de l'étape d'acquisition à un instant t du procédé de déduction de corrosion, et
- une étape d'évolution différentielle entre les différentes estimations de l'état de corrosion estimé pour chaque témoin à chaque instant t.

## Patentansprüche

1. Bindemittel in einem flüssigen Zustand, insbesondere hydraulischer Beton, mit einem Mörtel und Korrosionsindikatoren (1A, 1B, 1C, 1D, 1E), die mindestens einen Permanentmagneten (10), der ein Magnetfeld erzeugt, und eine durch Krankheitserreger, insbesondere Chloridionen, korrodierbare Schicht (12) umfassen, wobei die korrodierbare Schicht (12) mit dem Magneten fest verbunden ist und ein ferromagnetisches Material umfasst, das es ermöglicht, das vom Magneten (10) erzeugte Magnetfeld in Abhängigkeit vom Korrosionszustand des ferromagnetischen Materials der korrodierbaren Schicht (12) zu verändern, und dadurch, dass die korrodierbare Schicht (12) eine Seite des Permanentmagneten (10) bedeckt, der eine Südpolarität (102) und eine Nordpolarität (104) aufweist, wobei das Bindemittel im festen Zustand zu einer porösen Umhüllung (42) wird und dazu bestimmt ist, eine Umhüllung (42) einer bewehrten Betonwand (4) zu werden.

2. Bindemittel in einem flüssigen Zustand nach Anspruch 1, in dem der Indikator eine Schutzschicht (11), z. B. Kunststoff, zwischen dem Permanentmagneten (10) und der korrodierbaren Schicht (12) zum Schutz des Permanentmagneten (10) umfasst.

3. Bindemittel in einem flüssigen Zustand nach dem vorhergehenden Anspruch, in dem das ferromagnetische Material der korrodierbaren Schicht (12) Eisen ist.

4. Bindemittel in einem flüssigen Zustand nach einem der vorhergehenden Ansprüche, in dem der Permanentmagnet (10) mindestens 90% Ferrit umfasst und beim Kontakt mit der korrodierbaren Schicht (12) eine magnetische Feldstärke von etwa 0,01 bis 0,045T aufweist.

5. Bewehrte Betonwand (4) einer Struktur mit:
- einer Metallarmierung (41),
- einer porösen Umhüllung (42), insbesondere aus Beton, die die Metallarmierung (41) bedeckt und mindestens eine Fläche zur Zustandsbeurteilung (421) der Wand (4) bildet, und
- Korrosionsindikatoren (10), die mindestens einen Permanentmagneten (10), der ein Magnetfeld erzeugt, und eine durch Krankheitserreger, insbesondere Chloridionen, korrodierbare Schicht (12) umfassen, wobei die korrodierbare Schicht (12) fest mit dem Magneten verbunden ist und ein ferromagnetisches Material umfasst, das es ermöglicht, das vom Magneten (10) erzeugte Magnetfeld in Abhängigkeit vom Korrosionszustand des ferromagnetischen Materials der korrodierbaren Schicht (12) zu verändern, und dadurch, dass die korrodierbare Schicht (12) eine Seite des Permanentmagneten (10) bedeckt, der eine Südpolarität (102) und eine Nordpolarität (104) aufweist, die in der porösen Umhüllung (42) zwischen der Metallarmierung (41) und der Fläche zur Zustandsbeurteilung (421) angeordnet sind, und in dem die Korrosionsindikatoren (1) an verschiedenen Positionen zwischen der Fläche zur Zustandsbeurteilung (421) und der Metallarmierung (41) verteilt sind.

6. Bewehrte Betonwand (4) einer Struktur nach Anspruch 5, in der der Korrosionsindikator (1) eine Schutzschicht (11), z. B. Kunststoff, zwischen dem Permanentmagneten (10) und der korrodierbaren Schicht (12) zum Schutz des Permanentmagneten (10) umfasst.

7. Bewehrte Betonwand (4) einer Struktur nach dem vorhergehenden Anspruch, in der das ferromagnetische Material der korrodierbaren Schicht (12) Eisen ist.

8. Bewehrte Betonwand (4) einer Struktur nach einem der Ansprüche 5 bis 7, in der der Permanentmagnet (10) mindestens 90% Ferrit umfasst und bei Kontakt mit der korrodierbaren Schicht (12) eine magnetische Feldstärke von etwa 0,01 bis 0,045T aufweist.

9. Maritime Struktur mit einer bewehrten Betonwand (4) nach einem der Ansprüche 5 bis 8, in der die Fläche zur Zustandsbeurteilung (421) außen liegt und die Wand mindestens eine Schwallzone aufweist, wobei mindestens einer der Korrosionsindikatoren (1) zwischen der äußeren Fläche zur Zustandsbeurteilung der Schwallzone und der Metallbewehrung (41) angeordnet ist.

10. Verfahren, um auf Korrosion einer bewehrten Betonwand nach einem der Ansprüche 5 bis 8 rückzuschließen, umfassend:
- einen Schritt zum Erfassen von Daten zu einem Zeitpunkt t einer Messung einer induzierten Magnetfeldstärke für jeden magnetischen Korrosionsindikator an einem Referenzpunkt jedes Indikators,
- einen Schritt des Vergleichens der erfassten Daten mit zuvor erfassten Anfangsdaten für denselben Referenzpunkt, die einer Magnetfeldstärke des Magneten des Indikators an diesem Referenzpunkt in einem Neuzustand der Struktur entsprechen,
- einen Schritt des Schätzens des Korrosionszustands entsprechend des Vergleichs anhand eines Diagramms oder einer Datenbank,
insbesondere Referenzkurven oder -tabellen, die es ermöglichen, Korrosion anhand der Differenz zwischen Messung und Daten zu identifizieren.

11. Verfahren zum Verfolgen der Korrosionsfront in einer porösen Umhüllung (42) einer Wand (4) nach einem der Ansprüche 5 bis 8, die Schritte des Verfahrens zum Rückschluss auf Korrosion nach Anspruch 10 umfassend und:
- einen Schritt zum Erfassen von Anfangsdaten für jeden Indikator, die Daten zur Identifizierung des Indikators, die Anfangsdaten der Magnetfeldstärke des Magneten des Indikators am Referenzpunkt auf der Fläche zur Zustandsbeurteilung, Daten zur Lokalisierung des Referenzpunkts in Bezug auf die Fläche zur Zustandsbeurteilung, Daten einer Tiefe zwischen dem Referenzpunkt auf der Fläche zur Zustandsbeurteilung und dem Indikator umfassen,
- einen Schritt des Messens der Stärke des durch den Indikator induzierten Magnetfelds an jedem Referenzpunkt zu einem Zeitpunkt t nach der anfänglichen Datenerfassung, wobei jede Messung zu dem Zeitpunkt t die Erfassung der Daten zu dem Zeitpunkt t des Schrittes der Erfassung zu einem Zeitpunkt t des Verfahrens zum Rückschluss auf Korrosion ermöglicht, und
- einen Schritt der differentiellen Beurteilung zwischen den verschiedenen Schätzungen des geschätzten Korrosionszustands für jeden Indikator zu jedem Zeitpunkt t.

## Claims

1. A binder in a liquid state, especially hydraulic concrete, comprising a mortar and corrosion indicators (1A, 1B, 1C, 1D, 1E) comprising at least one permanent magnet (10) generating a magnetic field, and a layer (12) being corrodible by pathogenic agents, especially chloride ions, the corrodible layer (12) being integral with the magnet, the corrodible layer (12) comprising a ferromagnetic material for modifying the magnetic field generated by the magnet (10) as a function of the corrosion state of the ferromagnetic material of the corrodible layer (12), and in that the corrodible layer (12) covers a face of the permanent magnet (10) having a South polarity (102) and a North polarity (104), the binder becoming a porous coating (42) in the solid state and being intended to become a coating (42) of a reinforced concrete wall (4).

2. The binder in a liquid state according to claim 1, wherein the binder comprises a protective layer (11), such as plastic, between the permanent magnet (10) and the corrodible layer (12) for protecting the permanent magnet (10).

3. The binder in a liquid state according to the preceding claim, wherein the ferromagnetic material of the corrodible layer (12) is iron.

4. The binder in a liquid state according to any of the preceding claims, wherein the permanent magnet (10) comprises at least 90% ferrite and has a magnetic field intensity in contact with the corrodible layer (12) of about 0.01 to 0.045T.

5. A reinforced concrete wall (4) of a structure comprising:
- a metal reinforcement (41),
- a porous coating (42), especially of concrete, covering the metal reinforcement (41) and forming at least one inspection surface (421) of the wall (4), and
- corrosion indicators (10) comprising at least one permanent magnet (10) generating a magnetic field, and a layer (12) being corrodible by pathogenic agents, especially chloride ions, the corrodible layer (12) being integral with the magnet, the corrodible layer (12) comprising a ferromagnetic material for modifying the magnetic field generated by the magnet (10) as a function of the corrosion state of the ferromagnetic material of the corrodible layer (12), and in that the corrodible layer (12) covers a face of the permanent magnet (10) having a South polarity (102) and a North polarity (104), located in the porous coating (42) between the metal reinforcement (41) and the inspection surface (421) and wherein the corrosion indicators (1) are distributed at different positions between the inspection surface (421) and the metal reinforcement (41).

6. The reinforced concrete wall (4) of a structure according to claim 5, wherein the corrosion indicator (1) comprises a protective layer (11), such as plastic, between the permanent magnet (10) and the corrodible layer (12) to protect the permanent magnet (10).

7. The reinforced concrete wall (4) of a structure according to the preceding claim, wherein the ferromagnetic material of the corrodible layer (12) is iron.

8. A reinforced concrete wall (4) of a structure according to any of claims 5 to 7, wherein the permanent magnet (10) comprises at least 90% ferrite and has a magnetic field intensity in contact with the corrodible layer (12) of about 0.01 to 0.045T.

9. A marine structure comprising a reinforced concrete wall (4) according to one of claims 5 to 8, wherein the inspection surface (421) is external and the wall comprises at least one tidal zone, wherein at least one of the corrosion indicators (1) is located between the external inspection surface of the tidal zone and the metal reinforcement (41).

10. A method for deducing corrosion of a reinforced concrete wall according to one of claims 5 to 8 comprising:
- a step of acquiring a piece of data at a time t from a measurement of an intensity of the induced magnetic field for each magnetic corrosion indicator at a reference point of each indicator,
- a step of comparing the piece of data acquired with an initial piece of data previously acquired for this same reference point corresponding to a magnetic field intensity of the indicator magnet at this reference point in a new state of the structure,
- a step of estimating the corrosion state as a function of the comparison as a function of a chart or a database, especially curves or a reference table for identifying corrosion as a function of the difference between the measurement and the piece of data.

11. A method for monitoring corrosion front in a porous coating (42) of a wall (4) according to one of claims 5 to 8, comprising the steps of the deduction method of claim 10 and:
- a step of acquiring initial data for each indicator comprising a piece of data for identifying the indicator, the initial piece of data for the magnetic field intensity of the magnet of the indicator at the reference point on the inspection surface, a piece of data for locating the reference point relative to the inspection surface, a piece of data for a depth between the reference point on the inspection surface and the indicator,
- a step of measuring intensity of the magnetic field induced by the indicator at each reference point at a time t after acquiring the initial piece of data, wherein each measurement at time t enables acquisition of the piece of data at time t of the acquisition step at a time t of the corrosion deduction method, and
- a step of differentially evaluating between the different estimates of the corrosion state estimated for each indicator at each time t.
